# EUROPÄISCHE PATENTANMELDUNG

(11) **EP 2 848 542 A1**
(43) Veröffentlichungstag der Anmeldung: **18.03.2015**
(21) Anmeldenummer: 13184432.6
(22) Anmeldetag: 13.09.2013
(51) Int. Cl.: B65B 57/14, B65B 1/44, G01F 23/22, G01F 23/296

(54) **Vorrichtung und Verfahren zum Befüllen eines Behälters mit einem partikelförmigen Material**

(71) Anmelder: Cota, Aldo, 85077 Manching (DE)
(72) Erfinder: Cota, Aldo, 85077 Manching (DE)
(74) Vertreter: Reitstötter Kinzebach

(57) **Zusammenfassung**

Die Erfindung betrifft eine Vorrichtung (1) zum Befüllen eines Behälters (2) mit einem partikelförmigen Material. Die Vorrichtung (1) umfasst einen Vorratsbehälter (4), der mit dem partikelförmigen Material befüllbar ist, wobei der Vorratsbehälter (4) eine Öffnung (9) aufweist. Weiterhin umfasst die Vorrichtung (1) ein Befüllelement (3), eine Zuführeinrichtung (5) zum Zuführen des partikelförmigen Materials zu dem Befüllelement (3), wobei der Vorratsbehälter (4) das partikelförmige Material an die Zuführeinrichtung (5) abgibt, und eine Messeinrichtung (6), mittels welcher ermittelbar ist, ob eine Störung während des Befüllvorgangs in dem Befüllelement vorliegt. Ferner umfasst die Vorrichtung (1) eine Steuervorrichtung (11), mittels welcher bei ermittelter Störung die Zufuhr des partikelförmigen Materials über die Zuführeinrichtung (5) zu dem Befüllelement (3) unterbrechbar ist. Ferner betrifft die Erfindung ein Verfahren zum Befüllen eines Behälters (2) mit einem partikelförmigen Material.

## Beschreibung

Die vorliegende Erfindung betrifft eine Vorrichtung zum Befüllen eines Behälters, beispielsweise eines Reaktors für chemische Reaktionen, mit einem partikelförmigen Material, wie insbesondere Katalysator-Partikeln. Ferner betrifft die Erfindung ein Verfahren zum Befüllen eines mit einem partikelförmigen Material.

Reaktoren, in denen chemische Reaktionen stattfinden, enthalten häufig partikelförmiges Katalysatormaterial, das die gewünschten chemischen Reaktionen beschleunigt. Die Art und Weise, wie ein Reaktor mit Katalysatormaterial befüllt wird, hat einen großen Einfluss auf den späteren Ablauf der chemischen Reaktionen. Daher ist ein kontinuierlicher, gleichmäßiger und störungsfreier Befüllvorgang von großer Bedeutung. Häufig kommt es in diesen Reaktoren bzw. in dem in den Reaktor eingeführten Befüllelement während der Befüllung jedoch zu einem Stau des zu befüllenden Materials, welcher eine Verstopfung des weiteren Befüllsystems nach sich zieht. Dies kann beispielsweise durch einen Rückstau vom zu befüllenden Behälter herrühren, wenn sich das Material nicht gleichmäßig in diesen verteilt. Auch bei zu hoher Füllgeschwindigkeit kann es vorkommen, dass weniger Partikel aus dem Befüllsystem in den Behälter austreten, als von oben nachgefüllt werden. Um diese Störung zu beseitigen, muss der Füllvorgang unterbrochen und bereits eingefüllter Katalysator wieder abgesaugt werden, wodurch der gesamte Vorgang unnötig verzögert und die Stillstandzeit der Anlage unnötig verlängert wird.

Aufgabe der vorliegenden Erfindung ist daher die Bereitstellung einer Vorrichtung und eines Verfahrens zum Befüllen eines Behälters, mit denen unerwünschte Unterbrechungen während des Befüllens, wie Verstopfungen im Befüllsystem, vermieden werden.

Gelöst wird diese Aufgabe durch die Vorrichtung des Anspruchs 1 und das Verfahren des Anspruchs 9. Vorteilhafte Weiterbildungen von Vorrichtung und Verfahren sind Gegenstände der abhängigen Ansprüche.

Die erfindungsgemäße Vorrichtung umfasst einen Vorratsbehälter, eine Zuführeinrichtung, ein Befüllelement mit dem das partikelförmige Material in den zu befüllenden Behälter geleitet wird, eine Messeinrichtung und eine Steuervorrichtung. Der Vorratsbehälter ist mit dem partikelförmigen Material befüllbar, wobei der Vorratsbehälter eine Öffnung aufweist. Die Zuführeinrichtung führt dem Befüllelement das partikelförmige Material zu. Dabei gibt der Vorratsbehälter das partikelförmige Material an die Zuführeinrichtung ab. Weiterhin ist mittels der Messeinrichtung ermittelbar, ob eine Störung während des Befüllvorgangs in dem Befüllelement vorliegt. Bei ermittelter Störung ist mittels einer Steuervorrichtung die Zufuhr des partikelförmigen Materials über die Zuführeinrichtung zu dem Befüllelement unterbrechbar. Die Störung kann dabei beispielsweise ein Partikelstau im Befüllelement sein. Die erfindungsgemäße Vorrichtung erlaubt vorteilhafterweise, dass bei einem Partikelstau im Befüllelement die weitere Zufuhr des partikelförmigen Materials sofort unterbrochen werden kann. Dies verhindert, dass das Befüllelement überläuft, wenn z.B. ein Partikelstau in dem Befüllelement entstanden ist, der das partikelförmige Material daran hindert, weiter in den Behälter abzulaufen. Ist der Partikelstau beseitigt, kann die Befüllung des Behälters mit dem partikelförmigen Material über das Befüllelement fortgesetzt werden. Somit wird ein aufwändig zu beseitigender Rückstau im gesamten Befüllsystem vermieden.

Bei dem Befüllelement handelt es sich insbesondere um ein Rohr, z.B. Aus Kunststoff oder Metall, wie z.B. Edelstahl, welches bis in den zu befüllenden Behälter reicht. Um Flexibilität beim Einfüllen des partikelförmigen Materials zu gewährleisten, kann das Rohr zwei- oder mehrteilig ausgebildet sein und insbesondere am unteren Ende flexibel ausgestaltet_sein, z.B. in Form eines Kunststoffschlauchs oder Folienschlauchs, während es über den Rest seiner Länge starr ausgebildet ist. Die Länge des Befüllelements kann beispielsweise über An- und Abstecken von Steckelementen, oder verkürzten, oder verlängerten Schlauchelementen, beliebig variiert werden, um so an die jeweilige Größe des zu befüllenden Behälters optimal angepasst zu sein.

In einer Ausgestaltung der erfindungsgemäßen Vorrichtung umfasst die Messeinrichtung ein schaufelförmiges Element, das mit einer Antreibeinrichtung drehbar ist. Dieses schaufelförmige Element ist bevorzugt in dem Befüllelement angeordnet. Bei einer Störung im Befüllelement wird die Dichte des partikelförmigen Materials, welches sich in dem Befüllelement befindet derart hoch, dass sich das schaufelförmige Element nicht mehr frei drehen kann. Dies wird von der Antreibeinrichtung detektiert. Vorteilhafterweise handelt es sich hierbei um eine einfache mechanische Ausführung der Messeinrichtung, die auf kostengünstige Art und Weise realisiert werden kann.

In einer weiteren Ausgestaltung der erfindungsgemäßen Vorrichtung umfasst die Messeinrichtung einen Stab, der mit einer Antreibeinrichtung in Schwingung versetzbar ist. Im Falle einer Störung kann der Stab aufgrund einer höheren Dichte des partikelförmigen Materials nicht mehr frei schwingen. Dies wird von der Antreibeinrichtung detektiert. Hierbei handelt es sich um eine kostengünstige Alternative zum Füllstandmesser. Vorteilhaft ist weiterhin, dass der Stab platzsparend in dem Befüllelement angeordnet werden kann. Dieser kann also auch in engen Füllrohren untergebracht werden.

In einer anderen Ausgestaltung der erfindungsgemäßen Vorrichtung ist die Zuführeinrichtung in einem abgeschlossenen Gehäuse angeordnet. Dadurch wird verhindert, dass sich partikelförmiges Material oder Staub des partikelförmigen Materials in der Umgebung der Vorrichtung verteilt. Zudem wird auch eine Verschmutzung in die andere Richtung, also eine Verschmutzung der Zuführeinrichtung durch die Umgebung abgeschwächt.

Weiterhin kann das Befüllelement einen Eingang und einen Ausgang aufweisen, wobei die Messeinrichtung bei dem Eingang angeordnet ist. Durch den Eingang des Befüllelements gelangt das partikelförmige Material von der Zuführeinrichtung in das Befüllelement. Dadurch, dass die Messeinrichtung bei dem Eingang angeordnet ist, wird verhindert, dass bei einem Partikelstau in dem Befüllelement, dieses über die Anbringungshöhe der Messeinrichtung hinaus befüllt wird. Dies wiederum verhindert beispielsweise eine Verstopfung des Gehäuses, in welchem die Zuführeinrichtung angeordnet ist. Ist dieses nämlich verstopft, muss es geöffnet und die Verstopfung beseitigt werden. Dies wiederum ist mit einem hohen Aufwand verbunden.

Insbesondere ist der an die die Zuführeinrichtung abgegebene Volumenstrom des partikelförmigen Materials über eine in dem Vorratsbehälter angeordnete Schiebeeinrichtung regulierbar. Die Regulierung kann dabei maschinell oder manuell erfolgen. Insbesondere erlaubt die Schiebeeinrichtung eine offene Stellung und eine geschlossene Stellung. In der geschlossenen Stellung wird kein partikelförmiges Material an die Zuführeinrichtung abgegeben. In der offenen Stellung hingegen wird partikelförmiges Material an die Zuführeinrichtung abgegeben. Dabei kann die Schiebeeinrichtung je nach Stellung insbesondere verschieden große Öffnungen bereitstellen. Der Grad der Öffnung kann dann den Volumenstrom regeln. Die Zufuhr des partikelförmigen Materials an das Befüllelement kann also einfach durch das Schließen der Schiebeeinrichtung unterbrochen werden.

Insbesondere ist die Zuführeinrichtung im Wesentlichen horizontal angeordnet und weist einen Zulauf und einen Ablauf auf. Dabei sind die Öffnung des Vorratsbehälters an dem Zulauf und das Befüllelement an dem Ablauf der Zuführeinrichtung angeordnet. Dadurch sind die Beladung der Zuführeinrichtung mit dem partikelförmigen Material und die Befüllung des Befüllelements räumlich voneinander getrennt.

Bevorzugt umfasst die Zuführeinrichtung ein Förderband, wobei die über das Förderband in das Befüllelement geförderte Menge des partikelförmigen Materials über die Laufgeschwindigkeit des Förderbands regulierbar ist. Die Zufuhr des partikelförmigen Materials kann einfach durch das Anhalten des Förderbands unterbrochen werden. Dabei kann die Steuervorrichtung ein Signal an das Förderband abgeben, falls eine Störung ermittelt wurde.

Weiterhin betrifft die Erfindung ein Verfahren zum Befüllen eines Behälters mit einem partikelförmigen Material, bei dem das partikelförmige Material über eine Öffnung eines Vorratsbehälters an eine Zuführeinrichtung abgegeben wird. Das partikelförmige Material wird einem Befüllelement mittels der Zuführeinrichtung zugeführt. Es wird ermittelt, ob eine Störung während dem Befüllvorgang in dem Befüllelement auftritt. Die Zufuhr des partikelförmigen Materials zu dem Befüllelement wird unterbrochen, falls eine Störung des Befüllvorgangs ermittelt wird. Die Zufuhr des partikelförmigen Materials wird also vorteilhafterweise bereits dann unterbrochen, bevor eine Verstopfung des Gehäuses der Zuführeinrichtung überhaupt auftreten kann. Weiterhin wird gewährleistet, dass das kurzzeitig zu viel vorhandene partikelförmige Material abfließen kann, ohne sich in dem Befüllelement festzusetzen.

Wird festgestellt, dass die Störung nicht mehr vorliegt, kann die Zufuhr des partikelförmigen Materials fortgesetzt werden. Dabei kann die Fortsetzung der Zufuhr manuell oder automatisch veranlasst werden.

Das Verfahren wird insbesondere mit der erfindungsgemäßen Vorrichtung ausgeführt und weist daher alle Vorteile der Vorrichtung auf.

In einer Ausgestaltung des erfindungsgemäßen Verfahrens ist ein schaufelförmiges Element in dem Befüllelement angeordnet. Das schaufelförmige Element wird über eine Antreibeinrichtung gedreht. Die Störung des Befüllvorgangs wird dadurch ermittelt, dass das schaufelförmige Element daran gehindert wird, sich weiter zu drehen. Diese Drehverhinderung wird erfasst und es wird ein Signal zur Unterbrechung der Materialzufuhr abgegeben. Dazu ist die Steuervorrichtung der erfindungsgemäßen Vorrichtung bevorzugt mit dem Füllstandmesser und der Zuführeinrichtung gekoppelt.

In einer weiteren Ausgestaltung des erfindungsgemäßen Verfahrens ist ein schwingfähiger Stab in dem Befüllelement angeordnet. Dieser wird von einer Antreibeinrichtung in Schwingung versetzt. Die Störung des Befüllvorgangs wird dadurch ermittelt, dass der schwingfähige Stab von dem partikelförmigen Material daran gehindert wird, weiter zu schwingen. Die Schwingungsverhinderung wird erfasst und es wird ein Signal zur Unterbrechung der Materialzufuhr abgegeben.

Bevorzugt ist die Zuführeinrichtung ein Förderband. Dabei wird die Zufuhr zum Befüllelement dadurch unterbrochen, dass das Förderband angehalten wird.

Insbesondere wird die erfindungsgemäße Vorrichtung zum Befüllen eines Reaktorgefäßes mit Katalysatorpartikeln verwendet.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung
- Figur 2: zeigt ein erstes Ausführungsbeispiel des Füllstandmessers der erfindungsgemäßen Vorrichtung
- Figur 3: zeigt ein zweites Ausführungsbeispiel des Füllstandmessers der erfindungsgemäßen Vorrichtung.

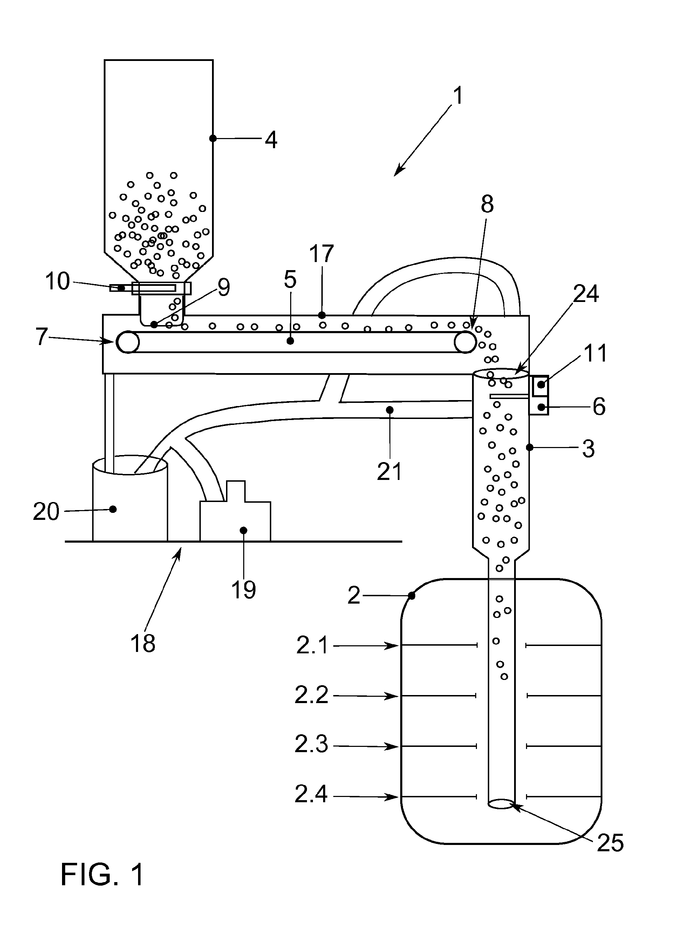

Mit Bezug zu Figur 1 wird ein Ausführungsbeispiel der erfindungsgemäßen Vorrichtung 1 erläutert. Die Vorrichtung 1 umfasst einen Vorratsbehälter 4, welcher mit einen partikelförmigen Material befüllbar ist. Das partikelförmige Material ist dabei bevorzugt ein Katalysator. Der Vorratsbehälter 4 läuft an seinem unteren Ende trichterförmig zusammen. Weiterhin weist der Vorratsbehälter eine Öffnung 9 auf, die als Trichterhals ausgebildet ist und durch welche die Katalysatorteilchen aus dem Vorratsbehälter 4 entweichen können. Der Vorratsbehälter 4 umfasst beispielsweise ein Volumen zwischen 3 und 4 m³.

Weiterhin ist an dem Vorratsbehälter 4 eine Schiebeeinrichtung 10 angeordnet. Mittels der Schiebeeinrichtung 10 kann der Volumenstrom an Katalysatorteilchen, welcher den Vorratsbehälter 4 über den Trichterhals 9 verlässt, geregelt werden.

Unterhalb des Trichterhalses 9 des Vorratsbehälters 4 ist eine Zuführeinrichtung 5 angeordnet, welche als Förderband ausgebildet ist. Der Trichterhals 9 ist dabei derart ausgebildet, dass der Abstand zwischen unterem Ende des Trichterhalses 9 und dem Förderband 5 variabel einstellbar ist z.B. zwischen 3 bis 10 cm oder zwischen 5 bis 8 cm, je nach Größe des verwendeten Befüllmaterials.

Das Förderband 5 weist dabei einen Zulauf 7 und einen Ablauf 8 auf. Bei dem Zulauf 7 treffen die Katalysatorteilchen von dem Trichterhals 9 auf das Förderband 5. Dabei ist der Trichterhals 9 des Vorratsbehälters 4 oberhalb der linken Seite 7 des Förderbands 5 angeordnet. Anschließend an die rechte Seite 8 des Förderbands 5 ist ein Befüllelement 3, über welches die Katalysatorteilchen in den zu befüllenden Behälter 2 befördert werden, angeordnet.

Das Förderband 5 ist in einem abgeschlossenen Gehäuse 17 angeordnet, so dass die Katalysatorteilchen und bei dem Verfahren entstehender Staub nicht an die Umgebung abgegeben werden können.

Die Katalysatorteilchen werden am Ablauf 8 des Förderbands derart in das Befüllelement 3 befördert, dass sie über eine Ablauföffnung des Gehäuses in einen Eingang 24 des Befüllelements 3 fallen. Das Befüllelement 3 endet in dem zu befüllenden Behälter 2, so dass die Katalysatorteilchen im freien Fall in den Behälter 2 fallen.

Im dargestellten Beispiel weist der Behälter 2 mehrere Einbauten in Form von Zwischenböden 2.1 bis 2.4, die vom Personal betreten werden können und jeweils ein Katalysatorvolumen von ca. 20 m³ aufnehmen können.

In dem Befüllelement 3 ist ein Füllstandmesser 6 angeordnet. Der Füllstandmesser 6 ist mit einer Steuervorrichtung 11 ausgestattet, welcher mit dem Förderband 5 gekoppelt ist. Bei Erreichen eines vorbestimmten Füllstandes sendet diese Steuervorrichtung 11 dann ein Signal an das Förderband 5, so dass sich dieses abschaltet.

Bei der gesamten Vorrichtung 1 handelt es sich vorzugsweise um ein geschlossenes System. Dadurch kann vermieden werden, dass möglicherweise gesundheitsschädliche Staubrückstände in die Umgebungsluft gelangen.

Weiterhin umfasst die Vorrichtung 1 ein Absaugsystem 18, mittels welchem an verschiedenen Stellen Katalysatorstaub aus dem System entfernt werden. Dieses umfasst einen Sauger 19, einen Behälter 20, in welchen der entfernte Staub geleitet wird und ein Schlauchsystem 21, welches mit den verschiedenen Stellen, an denen der Staub aus dem System entfernt wird, verbunden ist. Wird der Staub nicht entfernt, so kann sich dieser im Katalysatorfestbett in den Zwischenräumen zwischen den Katalysatorpartikeln niedersetzen. Durch den an diesen Stellen reduzierten Durchfluss an Reaktionsteilnehmern kann dies z.B. zur Ausbildung sogenannter "Hot Spots" führen, d.h. Zonen unerwünscht erhöhter Temperatur im Reaktor, welche die Steuerung des Reaktionsverlaufs beeinträchtigen.

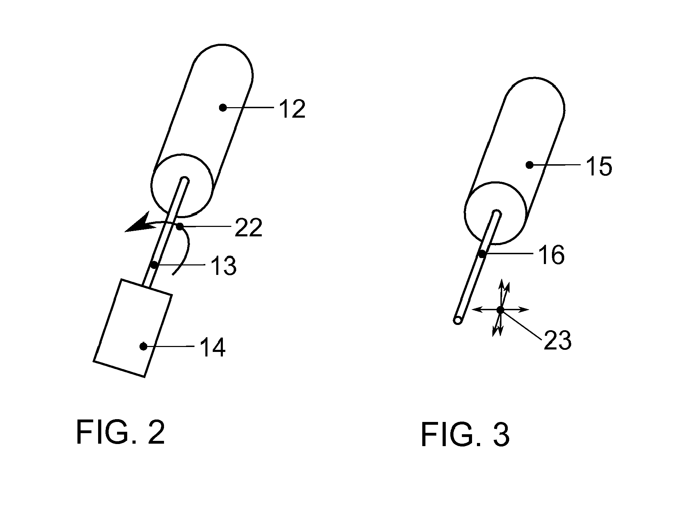

Ein erstes Ausführungsbeispiel der Messeinrichtung 6 ist in Figur 2 gezeigt.

Die Messeinrichtung 6 umfasst eine Rotationswelle 12, welche mit einen Stab 13 verbunden ist. An dem vorderen Ende des Stabes 13 ist ein schaufelförmiges Element 14 angebracht.

Wird die Rotationswelle 12 in Rotation versetzt, so gibt sie die Rotationsbewegung 22 an den Stab 13 weiter. Folglich dreht sich das schaufelartige Element 14, welches an dem Stab 13 angebracht ist. Dabei ist die Geschwindigkeit der Rotationsbewegung 22 des schaufelartigen Elements 14 von der Füllhöhe und dem Volumenstrom der Katalysatorteilchen in dem Befüllelement 3 abhängig. Je höher die Dichte der Katalysatorteilchen in der Höhe der Messeinrichtung 6 ist, desto langsamer dreht sich das schaufelartige Element 14 aufgrund des Widerstands, den die Katalysatorteilchen bereitstellen. Wird die Geschwindigkeit der Rotationsbewegung 22 des schaufelartigen Elements 14 abgebremst, so überträgt sich dies wiederum auf die Rotationswelle 12. Ab einer bestimmten Dichte der Katalysatorteilchen dreht sich das schaufelartige Element 14 nicht mehr, so dass auch die Rotationswelle 12 blockiert.

Ein zweites Ausführungsbeispiel der Messeinrichtung 6 ist in Figur 3 gezeigt.

Diese Messeinrichtung 6 umfasst einen Motor 15, welcher einen an dem Motor 15 angebrachten elastischen Stab 16 in Schwingungen versetzt. Die Schwingung ist dabei eine überlagerte Bewegung 23 von Schwingungen in alle Raumrichtungen. Das Funktionsprinzip der Messeinrichtung 6 mit dem schwingfähigen Stab 16 ist dabei vergleichbar mit dem Funktionsprinzip der Messeinrichtung 6 mit schaufelförmigen Element 14 aus Figur 2. Die Schwingungsfrequenz kann so hoch sein, dass der Stab 16 vibriert. Die Schwingungsfrequenz des Stabes 16 ist abhängig von der Füllhöhe und dem Volumenstrom der Katalysatorteilchen. Denn je höher die Dichte der Katalysatorteilchen auf Höhe des Füllstandmessers 6 desto langsamer ist die Schwingungsfrequenz des Stabes 16. Dies wird an den Motor übertragen. Ab einer bestimmten Dichte schwingt der Stab 16 nicht mehr, so dass der Motor 15 blockiert.

Im Folgenden wird ein Ausführungsbeispiel des erfindungsgemäßen Verfahrens erläutert, welches mit der erfindungsgemäßen Vorrichtung 1 aus Figur 1 durchgeführt wird:
Dabei wird zunächst die zu befüllende Menge an Katalysatorteilchen bestimmt. Diese wird dann in den Vorratsbehälter 4 gegeben.

Die Schiebeeinrichtung 10 wird dann soweit geöffnet, bis ein gewünschter Volumenstrom an Katalysatorteilchen hindurchfließt. Beispielsweise liegt der Volumenstrom zwischen 1 m³/1 min bis 1 m³/10 min, wie z.B. bei 1 m³/7 min. Die Schiebeeinrichtung 10 kann entweder manuell oder maschinell geöffnet werden. Bei einer automatischen Steuerung ist eine Steuerung über Druckluft bevorzugt.

Durch die Öffnung der Schiebeeinrichtung 10 werden die Katalysatorteilchen über die Öffnung 9 des Vorratsbehälters 4 an das Förderband 5 abgegeben. Das in dem abgeschlossenen Gehäuse 17 angeordnete Förderband 5 transportiert die Katalysatorteilchen von dem Zulauf 7 unterhalb des Trichterhalses 9 des Vorratsbehälters 4 zu seinem Ablauf 8. Dort werden die Katalysatorteilchen in das Befüllelement 3 befördert, so dass sie im freien Fall durch den Eingang des Befüllelements 3 in den Behälter 2 fallen.

Die Messeinrichtung 6 ist im vorliegenden Beispiel in einem kurzen Abstand unterhalb des Eingangs 24 des Befüllelements 3 angeordnet. Auf ihrem Weg durch das Befüllelement 3 müssen die Katalysatorteilchen die Messeinrichtung 6 passieren.

Gleichzeitig mit dem Öffnen der Schiebeeinrichtung 10 wird der Motor des Füllstandmessers 12 angeschaltet. Der Stab 16 beginnt zu vibrieren.

Können die Katalysatorteilchen am Ende des Befüllelements 3 nicht mehr in den Behälter 2 ablaufen, so entsteht ein Partikelstau in dem Befüllelement 3.

Ein solcher Stau kann auch dann entstehen, wenn die Füllgeschwindigkeit höher ist, als die Geschwindigkeit, mit der die Katalysatorteilchen das Befüllelement 3 wieder verlassen.

Erreichen die Katalysatorteilchen nun den Füllstandmesser 12, so beeinflusst dies die Schwingungsfrequenz des Stabes 16. Ist der Stab vollständig von Katalysatorteilchen umgegeben, so wird die Schwingung zu jeder Seite von den Teilchen abgedämpft, bis die Dichte derart hoch ist, dass der Stab 16 letztendlich nicht mehr schwingt. Der Motor 15 ist dabei derart ausgebildet, dass er bei einem Stillstand des Stabes 16 blockiert.

Die Steuervorrichtung 11, welche mit dem Motor gekoppelt ist, erfasst die Motorblockade. Daraufhin sendet sie ein Signal an das Förderband 5. Das Förderband 5 wird abgeschaltet.

Es werden also zunächst keine Katalysatorteilchen mehr in das Befüllelement 3 befördert. Dadurch wird verhindert, dass das Befüllelement 3 überläuft und eine Verstopfung des Gehäuses 17, in dem das Förderband 5 angeordnet ist, auftritt.

Bei Stillstand des Förderbandes bildet sich zwischen Trichterhals 9 des Vorratsbehälters 4 und Förderband 5 ein Konus aus Katalysatorteilchen aus. Dieser verhindert, dass mehr Katalysatorteilchen aus dem Vorratsbehälter 4 auf das Förderband gelangen. Die genaue Ausbildung des Konus kann dabei über den Abstand zwischen dem Trichterhals 9 des Vorratsbehälters 4 und dem Förderband 5 geregelt werden. Dieser Abstand kann beispielsweise zwischen 1 und 15 cm betragen. Alternativ kann der Abstand z.B. zwischen 3 bis 10 cm oder zwischen 5 bis 8 cm liegen.

Ist der Partikelstau in dem Befüllelement 3 beseitigt, fängt der Stab 16 wieder zu schwingen an. Daraufhin wird auch das Förderband 5 wieder angeschaltet. Beispielsweise kann dazu ein Signal an das Personal abgegeben werden, welches das Förderband 5 dann manuell wieder einschaltet. Alternativ kann sich das Förderband 5 auch automatisch wieder einschalten, wenn es ein entsprechendes Signal erhält.

Alternativ kann die Messeinrichtung 6 auch die Ausbildung aus Figur 2 aufweisen. Dreht sich das schaufelartige Element 14 aufgrund zu hoher Katalysatorteilchendichte in Höhe des Füllstandmessers 6 nicht mehr, so blockiert die Rotationswelle 12. Die Steuervorrichtung 11 erfasst wiederum die Motorblockade und sendet ein Signal an das Förderband 5. Das Förderband 5 wird daraufhin abgeschaltet.

Weitere Abwandlungen der hier beschriebenen konkreten Ausführungsformen kann der Fachmann unter Befolgung der erfindungsgemäßen technischen Lehre bereitstellen.

### BEZUGSZEICHENLISTE

- 1: Vorrichtung
- 2: Behälter
- 2.1-2.4: Einbauten
- 3: Befüllelement
- 4: Vorratsbehälter
- 5: Förderband
- 6: Messeinrichtung
- 7: Linke Seite Förderband
- 8: Rechte Seite Förderband
- 9: Trichterhals
- 10: Schiebeeinrichtung
- 11: Steuervorrichtung
- 12: Rotationswelle
- 13: Stab
- 14: Schaufelförmiges Element
- 15: Motor
- 16: Schwingfähiger Stab
- 17: Förderbandgehäuse
- 18: Absaugvorrichtung
- 19: Sauger
- 20: Behälter
- 21: Schlauchsystem
- 22: Rotationsbewegung
- 23: Schwingungsrichtungen
- 24: Eingang des Befüllelements
- 25: Ausgang des Befüllelements

## Patentansprüche

1. Vorrichtung (1) zum Befüllen eines Behälters (2) mit einem partikelförmigen Material, mit
- einem Vorratsbehälter (4), der mit dem partikelförmigen Material befüllbar ist, wobei der Vorratsbehälter (4) eine Öffnung (9) aufweist,
- einem Befüllelement (3),
- einer Zuführeinrichtung (5) zum Zuführen des partikelförmigen Materials zu dem Befüllelement (3), wobei der Vorratsbehälter (4) das partikelförmige Material an die Zuführeinrichtung (5) abgibt,
- einer Messeinrichtung (6), mittels welcher ermittelbar ist, ob eine Störung während des Befüllvorgangs in dem Befüllelement (3) vorliegt, und
- einer Steuervorrichtung (11), mittels welcher bei ermittelter Störung die Zufuhr des partikelförmigen Materials über die Zuführeinrichtung (5) zu dem Befüllelement (3) unterbrechbar ist.

2. Vorrichtung (1) nach Anspruch 1,
**dadurch gekennzeichnet, dass**
die Messeinrichtung (6) ein schaufelförmiges Element (14) umfasst, das mit einer Antreibeinrichtung (12) drehbar ist.

3. Vorrichtung (1) nach Anspruch 1,
**dadurch gekennzeichnet, dass**
die Messeinrichtung (6) einen Stab (16) umfasst, der mit einer Antreibeinrichtung (15) in Schwingungen versetzbar ist.

4. Vorrichtung (1) nach einem der vorhergehenden Ansprüche,
**dadurch gekennzeichnet, dass**
die Zuführeinrichtung (5) in einem abgeschlossenen Gehäuse (17) angeordnet ist.

5. Vorrichtung (1) nach einem der vorhergehenden Ansprüche,
**dadurch gekennzeichnet, dass**
das Befüllelement (3) einen Eingang (24) und einen Ausgang (25) aufweist, wobei die Messeinrichtung bei dem Eingang angeordnet ist.

6. Vorrichtung (1) nach einem der Ansprüche 1 bis 5,
**dadurch gekennzeichnet, dass**
der an die Zuführeinrichtung (5) abgegebene Volumenstrom des partikelförmigen Materials über eine in dem Vorratsbehälter (4) angeordnete Schiebeeinrichtung (10) regulierbar ist.

7. Vorrichtung (1) nach einem der vorhergehenden Ansprüche,
**dadurch gekennzeichnet, dass**
die Zuführeinrichtung (5) im Wesentlichen horizontal angeordnet ist und zwei Enden (7, 8) aufweist, wobei die Öffnung (9) des Vorratsbehälters (4) an einem ersten Ende angeordnet ist, und das Befüllelement (3) an einem zweiten Ende der Zuführeinrichtung (5) angeordnet ist.

8. Vorrichtung (1) nach einem der Ansprüche 1 bis 7,
**dadurch gekennzeichnet, dass**
die Zuführeinrichtung ein Förderband (5) umfasst, wobei die über das Förderband (5) in das Befüllelement (3) geförderte Menge des partikelförmigen Materials über die Laufgeschwindigkeit des Förderbands (5) regulierbar ist.

9. Verfahren zum Befüllen eines Behälters (2) mit einem partikelförmigen Material über ein Befüllelement (3), bei dem
- das partikelförmige Material über eine Öffnung (9) eines Vorratsbehälters (4) an eine Zuführeinrichtung (5) abgegeben wird,
- dem Befüllelement (3) das partikelförmige Material mittels der Zuführeinrichtung (5) zugeführt wird,
- ermittelt wird, ob eine Störung während des Befüllvorgangs in dem Befüllelement (3) auftritt, und
- die Zufuhr des partikelförmigen Materials zu dem Befüllelement (3) unterbrochen wird, falls eine Störung des Befüllvorgangs ermittelt wird.

10. Verfahren nach Anspruch 9,
**dadurch gekennzeichnet, dass**
- ein schaufelförmiges Element (14) in dem Befüllelement (3) angeordnet ist,
- das schaufelförmige Element (14) mittels einer Antreibeinrichtung (12) gedreht wird,
- die Störung des Befüllvorgangs dadurch ermittelt wird, dass das schaufelförmige Element (14) von dem partikelförmigen Material daran gehindert wird sich weiter zu drehen,
- die Drehverhinderung erfasst wird und
- ein Signal zur Unterbrechung der Materialzufuhr abgegeben wird.

11. Verfahren nach Anspruch 9,
**dadurch gekennzeichnet, dass**
- ein schwingfähiger Stab (16) in dem Befüllelement (3) angeordnet ist,
- der schwingfähige Stab (16) mittels einer Antreibeinrichtung (15) in Schwingung versetzt wird,
- die Störung des Befüllvorgangs dadurch ermittelt wird, dass der schwingfähige Stab (16) von dem partikelförmigen Material daran gehindert wird, weiter zu schwingen,
- die Schwingungsverhinderung erfasst wird und
- ein Signal zur Unterbrechung der Materialzufuhr abgegeben wird.

12. Verfahren nach einem der Ansprüche 9 bis 11,
**dadurch gekennzeichnet, dass**
die Zuführeinrichtung ein Förderband (5) ist, wobei die Zufuhr zum Befüllelement (3) dadurch unterbrochen wird, dass das Förderband (5) angehalten wird.

13. Verwendung der Vorrichtung (1) nach einem der Ansprüche 1 bis 8 zum Befüllen eines Reaktorgefäßes (2) mit Katalysatorpartikeln.
